# EUROPEAN PATENT APPLICATION

(11) **EP 1 586 362 A2**
(43) Date of publication of application: **19.10.2005**
(21) Application number: 05102712.6
(22) Date of filing: 07.04.2005
(51) Int. Cl.: B01D 46/22, B01D 46/42, C14C 15/00

(54) **Spraying machine for tannery hides**

(30) Priority: 08.04.2004 IT UD20040071
(71) Applicant: Bergi S.p.A., 36071 Arzignano (VI) (IT)
(72) Inventor: Bergozza, Giovanni, 36071 Arzignano (VI) (IT); Massignani, Maurizio, 36071 Arzignano (VI) (IT)
(74) Representative: Petraz, Davide Luigi

(57) **Abstract**

Spraying machine (10) for tannery hides (11) comprising at least a spraying chamber (16) inside which the hides (11) are introduced, a spraying device (12) which sprays on the hides (11) a desired quantity of a covering product, suction members (15) arranged below the spraying device (12) and the hides (11) inserted in the spraying chamber (16), which suck in the fumes associated with the covering product, in order to convey them outside the spraying chamber (16), and filter elements (14) which filter the fumes before they are discharged outside the spraying chamber (16). The filter elements (14) comprise a dry filter (29) which is arranged between the spraying device (12) and the suction members (15), and collects the solid residues present in the fumes.

## Description

### FIELD OF THE INVENTION

The present invention is applied in the field of industrial tanning, and concerns a spraying machine, for depositing covering products on the hides, such as for example pigments, resins, oils, paraffin, glues or other. To be more exact, the spraying machine according to the present invention comprises a filter device able to collect the solid residues present in the fumes generated during the spraying of the covering products, so as to prevent said residues being introduced into the atmosphere through the chimneys that discharge said fumes.

### BACKGROUND OF THE INVENTION

Spraying machines for tannery hides are known, able to spray some covering products on the hides, such as for example pigments, resins, oils, paraffin, glues or other, and comprising at least a conveyor belt to feed the hides, a closed cabin wherein, by means of relative nozzles, the covering products are sprayed, and a lateral collector, arranged in the lower part of the cabin, to suck in the fumes produced during the spraying process.

Known machines also comprise a first filter device able to filter the fumes produced during the spraying of the covering product, by passing the fumes through a layer of water, and a second filter device, dry, arranged downstream of the cabin, to prevent the fumes escaping therefrom.

From GB-A-2098885 it is known a spray booth which includes spray nozzles mounted on a turntable, an air purifier comprising two water tanks placed under the spraying area, two water tanks placed in the middle, two still areas with drop separators, four final dry filtering areas and four air discharge channels leading to two fan intakes.

From EP-A-0960948 it is known a tanning drum supplied with water and liquid chemicals via nozzles positioned near the axis of rotation of the tanning drum. Air is circulated via a fan, filter and heater. Temperature probes are used to control operation of the fan and heater.

The known solution has the disadvantage, however, that it needs complex plants for pumping, containing and recycling the water used for filtering, thus making said machines expensive, complex and bulky.

Moreover, known spraying machines provide to use two distinct filter devices, thus further increasing the production and design costs thereof.

Another disadvantage is that the filter devices using water need frequent cleaning steps, since their filtering capacity is reduced constantly and quickly; therefore, known machines comprising such devices must be stopped very frequently and for long periods, so as to allow cleaning and maintenance.

This shortcoming entails a further increase in costs and a lower productivity of the machine.

Moreover, current filtration plants using water, of the known type, have the disadvantage that they require a periodic change of the water used: this water must then be disposed of in a purifier, with high costs of transport and disposal.

From EP-A-1396284 it is known a tannery machine provided with an apparatus for the purification of smoke, vapours and other pollutants in suspension, which works on the principle of the so called "dry scrubbing". This known apparatus uses two filtering devices placed outside the spraying chamber, each one in front of a respective suction mouth, and has the disadvantage not to prevent the dissemination of smoke, vapours and other pollutants in suspension inside the spraying chamber.

One purpose of the present invention is to achieve a spraying machine for tannery hides which is simple and economical to make, and which at the same time will guarantee optimum filtering of the fumes produced during the spraying steps, before they are discharged.

Another purpose of the present invention is to achieve a spraying machine that guarantees over time a constant quality of the filtration performed, and which does not require long, frequent and expensive steps to maintain and clean the filter device.

The Applicant has devised, tested and embodied this invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a spraying machine for tannery hides according to the present invention comprises at least a spraying chamber inside which the hides are able to be introduced by a support means, for example an endless belt, or tape, spraying means disposed inside the spraying chamber and able to spray on said hides a desired quantity of a covering product, suction means disposed inside the spraying chamber at opposite site of said spraying means with respect to the support means and able to suck in the fumes associated with said covering product, in order to convey them outside said spraying chamber, and filter means able to filter said fumes before they are discharged outside said spraying chamber.

According to a characteristic feature of the present invention, the filter means comprise at least a dry filter disposed inside said spraying chamber between said support means and said suction means and able to collect the solid residues present in said fumes.

In this way, it is not necessary to provide any pumping plant, or containing tank, since the filter used in the machine according to the present invention does not provide to use liquid substances to filter the fumes, which is an advantage in terms of the costs of production and maintenance, and also in terms of the bulk of the machine. Moreover, the filtration performed in any case guarantees an optimum abatement of the solid residues present in the fumes, even though two distinct filters are not required.

In a preferential form of embodiment, the dry filter comprises a continuous sheet of filtering material, such as for example a non-woven fabric, paper, cotton, PET fabric, or suchlike, wound with its ends around two cylinders, so as to form corresponding coils opposite each other with respect to a hypothetical axis of introduction of the hides into the spraying chamber.

To be more exact, the continuous sheet is positioned below the hide, so that the solid parts present in the fumes generated are deposited directly on the sheet, outside the space occupied by the hide, and are subjected to filtration.

Advantageously, at least one of the two cylinders is motorized, to allow the selective feed and tensioning of the continuous sheet, so that the latter is always clean and tense at the beginning of each spraying step.

In this way, a constant quality of the filtration performed is guaranteed, since the continuous sheet is replaced on each occasion, automatically, and hence without needing to provide cyclical cleaning steps, thus determining an increase in productivity of the spraying machine according to the invention, and a reduction in the management costs.

The spraying machine according to the present invention can also comprise, according to a variant, movement means that automatically feed the hides inside the spraying chamber.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic plane view of the spraying machine according to the present invention;
- fig. 2 is a schematic view from II of fig. 1;
- fig. 3 is a schematic view from III of fig. 1.

### DETAILED DESCRIPTION OF A PREFERENTIAL FORM OF EMBODIMENT

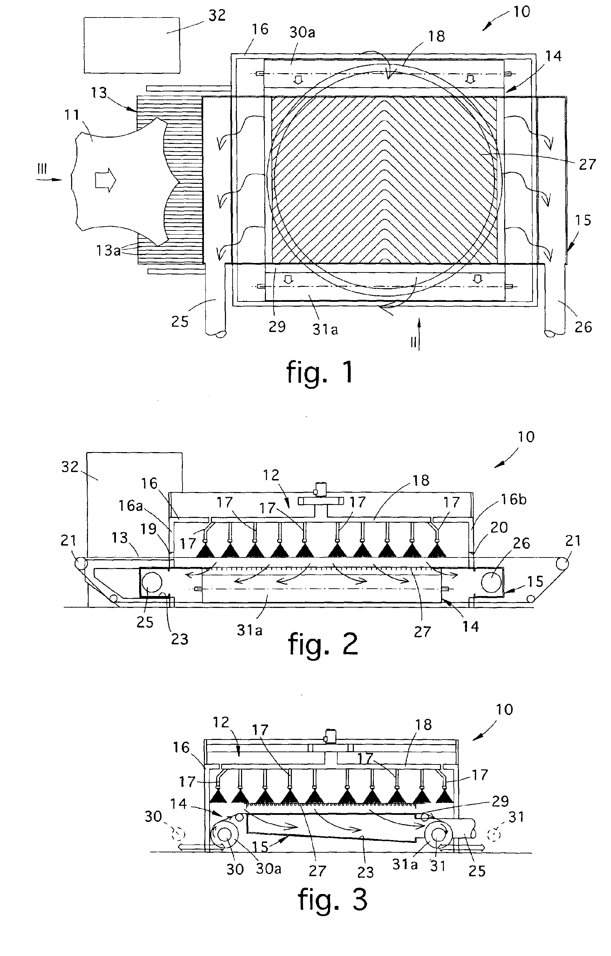

With reference to fig. 1, a spraying machine 10 for tannery hides according to the present invention is able to spray on a hide 11 a layer of covering product, such as for example a pigment, a resin, an oil, a paraffin, a glue or other, and comprises a spraying cabin 16, a spraying device 12, an endless feed belt 13, a suction member 15, arranged below the spraying cabin 16 and the feed belt 13, and a dry filter device 14, positioned below the feed belt 13 between the spraying cabin 16 and the suction member 15.

The spraying cabin 16 (figs. 2 and 3) comprises a box-like structure open downwards, inside which the spraying device 12 is disposed. The spraying cabin 16 comprises a first wall 16a, wherein an inlet aperture 19 is obtained, and a second wall 16b, opposite to the first wall 16a and wherein an outlet aperture 20 is obtained. The hides 11 to be treated are fed into the spraying cabin 16 through the inlet aperture 19 and are discharged from the spraying cabin 16 through the outlet aperture 20.

The spraying device 12 comprises a plurality of nozzles 17 arranged on a rotary turntable 18, facing towards the feed belt 13 and able to spray a desired quantity of covering product onto the hides 11 introduced into the spraying cabin 16 by said feed belt 13.

The feed belt 13, in this case, is formed by a plurality of annular wires 13a arranged parallel and separated from each other and wound, in a known manner, around two movement cylinders 21 and 22, of which at least one is motorized.

The suction member 15 comprises a suction compartment 23 communicating with the inside of the spraying cabin 16, and is provided inside with two lateral suction collectors 25 and 26, able to suck in the fumes generated during the spraying steps, in order to discharge them outside the spraying cabin 16. The suction member 15 also comprises, in correspondence with the zone of communication between the suction compartment 23 and the spraying cabin 16, a supporting grid 27, whose functions will be explained in more detail hereafter.

The filter device 14, as we said, is dry, that is, without any liquid substance to filter the fumes generated by the covering product during the spraying steps.

In this case, the filter device 14 comprises a continuous sheet 29 of filtering material, advantageously recovered such as for example TNT, resting on the supporting grid 27, to prevent it from being sucked in by the suction collectors 25 and 26, and wound with its ends around two cylinders 30 and 31, so as to form corresponding coils 30a and 31a opposite each other with respect to a hypothetical axis of introduction for the hides 11 inside the spraying cabin 16.

The cylinder indicated by the reference number 31 is driven by means of a drive member, of a known type and not shown in the drawings, so as to allow the selective feed of the continuous sheet 29, while the cylinder indicated by the number 30 is associated with a braking member, also of a known type and not shown in the drawings, which guarantees the tensioning of the continuous sheet 29. Advantageously, the cylinder 31 rotates with a number of revolutions that decreases as the diameter of the coil 31a increases, so that the speed of translation of the continuous sheet 29 remains constant, so as to have a regular filtration of the fumes produced.

Moreover, as shown in fig. 3, the two cylinders 30 and 31 are movable between a first operating position, wherein they are inside the suction compartment 23, and a second loading position, shown in a line of dashes, wherein they are outside the suction compartment 23, and allow to replace the coil 31a of dirty continuous sheet 29 with a new coil 30a of clean continuous sheet 29.

The spraying machine 10 according to the invention also comprises a command and control unit 32 able to coordinate the speeds of feed of the feed belt 13 and the continuous sheet 29, according to the quantity of covering product sprayed onto the hide 11, so that the continuous sheet 29 in any case abates a high number of solid residues.

The spraying machine 10 as described heretofore functions as follows.

First of all, a first hide 11 to be treated is positioned on the feed belt 13, and a new segment of continuous sheet 29 is arranged in correspondence with the nozzles 17. Subsequently the feed belt 13 is moved, so that it transports the hide 11 to be treated inside the spraying cabin 16.

When the hide 11 is in a pre-defined position inside the box-like structure, the nozzles 17 and the lateral suction collectors 25 and 26 are simultaneously activated, so that the covering product is deposited through spraying on the hide 11. In this step, fumes containing solid substances, residues of the covering product, are formed; they are either volatile or deposited on the sheet 29 outside the space occupied by the hide 11 and they are sucked in continuously by the two lateral suction collectors 25 and 26.

The suction performed by the two lateral collectors 25 and 26 generates a flow of air which induces the fumes produced to pass through the continuous sheet 29. This induced passage of the fumes determines a filtration thereof, with the consequent deposition on the continuous sheet 29 of the solid particles present therein.

When the nozzles 17 are activated, the command and control unit 32 commands the drive of the cylinder 31, in order to wind the continuous sheet 29. This winding determines a continuous renewal of the sheet 29 below the hide 11 to be treated, thus guaranteeing a constant quality of the filtration performed.

The fumes thus filtered are then sucked in by the lateral collectors 25 and 26, and discharged outside the spraying cabin 16.

Once the covering product has been sprayed onto the hide 11, the latter is transported by the feed belt 13 outside the spraying cabin 16, to be sent to subsequent steps of drying and storage.

The cylinder 31 is kept in movement for a determinate time after the discharge of the treated hide 11, in order to position a new segment of continuous sheet 29 under the nozzles 17, and guarantee the same quality of filtration during the subsequent spraying step.

With the machine 10 according to the present invention, the fumes introduced, after the filtration performed by the continuous sheet 29, into the surrounding environment, contain a quantity of residual solid substances greatly below the limits imposed by the law.

To give an example, in a machine 10 to enhance the crusts of the hides 11, where a bicomponent polyurethane is used, the residual solid substances are less than about 1 milligram per m³.

On the contrary, in the case of spraying hides 11, the residual solid substances are between about 2 and about 3 milligrams per m³.

The above values are obtained, advantageously, with a value of air being sucked in of less than or equal to that of known systems using water.

It is clear, however, that modifications and/or additions of parts may be made to the spraying machine 10 as described heretofore, without departing from the field and scope of the present invention.

For example, it comes within the field of the present invention to provide that the continuous sheet 29 is moved step-wise, that is, before each spraying cycle is started, a new segment of said continuous sheet 29 is positioned under the nozzles 17, in order to guarantee a uniform filtration over time.

It also comes within the field of the present invention to provide that, to guide the continuous sheet 29 and keep it tensed, two guide rails can be provided, arranged at the sides, of any known type.

It is also clear that, although the present invention has been described with reference to specific examples, a person of skill in the art shall certainly be able to achieve other equivalent forms of spraying machine for tannery hides, having the characteristics as set forth in the claims and hence all coming within the field of protection defined thereby.

## Claims

1. Spraying machine for tannery hides (11) comprising at least a spraying chamber (16) inside which said hides (11) are able to be introduced by support means (13), and spraying means (12) disposed inside said spraying chamber (16) and able to spray on said hides (11) a desired quantity of a covering product, suction means (15) disposed inside said spraying chamber (16) at opposite site of said spraying means (12) with respect to said support means (13) and able to suck in the fumes associated with said covering product, in order to convey them outside said spraying chamber (16), and filter means (14) able to filter said fumes before they are discharged outside said spraying chamber (16), **characterized in that** said filter means (14) comprise one or more dry filters (29) disposed inside said spraying chamber (16) between said support means (13) and said suction means (15), and able to collect the solid residues present in said fumes.

2. Spraying machine as in claim 1, **characterized in that** each of said dry filter comprises a continuous sheet (29) of filtering material wound around two cylinders (30, 31) so as to form corresponding coils (30a, 31a) disposed at opposite sites with respect to an axis of introduction of said hides (11) into said spraying chamber (16).

3. Spraying machine as in claim 2, **characterized in that** at least a first (31) of said two cylinders (30, 31) is associated with a drive member, to allow the selective feed of said continuous sheet (29) with respect to said suction means (15) and **in that** at least a second (30) of said two cylinders (30, 31) is associated with a braking member so as to determine, in cooperation with said first (31) of said two cylinders (30, 31), a tensioning of said continuous sheet (29).

4. Spraying machine as in any claim hereinbefore, **characterized in that** said support means comprises a feed belt (13) which crosses said spraying chamber (16).

5. Spraying machine as in claims 2 and 4, **characterized in that** said continuous sheet (29) is transversally disposed with respect to said feed belt (13).

6. Spraying machine as in claim 4 or 5, **characterized in that** said spraying chamber (16) comprises a box-like structure provided with an inlet aperture (19) and an outlet aperture (20) through which said feed belt (13) is able to transit.

7. Spraying machine as in claim 6, **characterized in that** said suction means (15) comprises a suction compartment (23), communicating with the inside of said box-like structure (16), two lateral suction collectors (25, 26) arranged inside said suction compartment (23), and able to suck in said fumes, and a supporting grid (27), in correspondence with the zone of communication between said suction compartment (23) and said box-like structure (16).

8. Spraying machine as in any claims from 4 to 6, **characterized in that** said feed belt (13) comprises a plurality of annular wire-like elements (13a), arranged parallel and separate from each other, and wound around two movement cylinders (21, 22).

9. Spraying machine as in any claim hereinbefore, **characterized in that** said spraying means (12) comprise a turntable (18) supporting a plurality of nozzles (17), able to spray said covering product on said hides (11).

10. Spraying machine as in any claim hereinbefore, **characterized in that** it also comprises a command and control unit (32) able to coordinate said support means (13) and said filter means (14), according to the quantity of covering product sprayed on said hides (11).

11. Spraying machine as in any claim hereinbefore, **characterized in that** it also comprises guide means arranged at the sides of each of said dry filters (29), and able to guide each of said dry filters (29) and keep it tensed.
